# EUROPÄISCHE PATENTSCHRIFT

(11) **EP 2 612 094 B1**
(45) Veröffentlichungstag und Bekanntmachung des Hinweises auf die Patenterteilung: **27.08.2014**
(21) Anmeldenummer: 11757410.3
(22) Anmeldetag: 21.07.2011
(51) Int. Cl.: F27B 7/32, F23G 5/44, F23K 3/16, C04B 7/44

(54) **VORRICHTUNG ZUM EINBRINGEN VON ABFALLSTOFFEN UND/ODER ALTERNATIVEN BRENNSTOFFEN IN DEN INNENRAUM EINES AGGREGATS**
DEVICE FOR INTRODUCING WASTE MATERIALS AND/OR ALTERNATIVE FUELS INTO THE INTERIOR OF AN ASSEMBLY
DISPOSITIF POUR INTRODUIRE DES DÉCHETS ET/OU DES COMBUSTIBLES ALTERNATIFS DANS L'ESPACE INTERNE D'UN GROUPE

(30) Priorität: 02.09.2010 AT 14732010
(43) Veröffentlichungstag der Anmeldung: 10.07.2013
(73) Patentinhaber: Holcim Technology Ltd., 8645 Rapperswil-Jona (CH)
(72) Erfinder: MAIER, Beat, René, CH-5024 Küttingen (CH); VORAMWALD, Werner, CH-4600 Olten (CH)
(74) Vertreter: Keschmann, Marc
(86) Internationale Anmeldenummer: PCT/IB2011/001704
(87) Internationale Veröffentlichungsnummer: WO 2012/028912

(56) Entgegenhaltungen:
- DE-C- 84 117
- GB-A- 701 744
- US-A- 2 386 336
- US-A- 2 763 220
- US-A1- 2007 144 411

## Beschreibung

Die Erfindung bezieht sich auf ein Wandteil eines Aggregats einer Klinkerherstellungsanlage mit einer Vorrichtung zum Einbringen von Abfallstoffen und/oder alternativen Brennstoffen in den Innenraum des Aggregats umfassend ein zum Innenraum des Aggregats offenes Rotorgehäuse mit einem zur Rotation antreibbaren Rotor mit zur Rotationsachse parallel angeordneten, radial gerichteten Leisten und zumindest eine an das Rotorgehäuse angeschlossene Leitung zum Zuführen von Abfallstoffen und/oder alternativen Brennstoffen.

Eine Verbrennungsvorrichtung, welche innerhalb einer Ofenkammer einen Rost enthält, über welchen Brennstoffe mittels einer Sprinkler-Aufgabeeinrichtung verteilt werden, ist in der GB 701 744 A offenbart.

Abfallstoffe und alternative Brennstoffe fallen üblicherweise in unterschiedlichen Aggregatszuständen und unterschiedlichen Zusammensetzungen an. Beispielsweise ist es bekannt, Altreifen durch Fördereinrichtungen an eine Aufgabestelle an einem Drehrohrofen einer Zementklinkerherstellungsanlage zu fördern, wobei die entsprechenden Anlagenteile den Dimensionen von Altreifen sowie den jeweils sinnvoller Weise zuzuführenden Massen derartiger Altstoffe angepasst sein müssen. Unterschiedliche Feststoffe, welche zumeist in unterschiedlichen Formgebungen vorliegen, erfordern entweder eine speziell an die Formgebung angepasste Förder- und Zufuhreinriehtung oder aber eine zerkleinerung, um das Material als Schüttgut an eine Aufgabestelle zu verbringen. Im Fall von mechanisch zerkleinerten Feststoffen schwankt allerdings die chemische Zusammensetzung des zerkleinerten Rohmaterials relativ stark in Abhängigkeit von unterschiedlichen Abfallstoffen bzw. unterschiedlichen alternativen Brennstoffmaterialien.

Eine Vereinfachung der Förder- und Zuführeinrichtungen lässt sich prinzipiell dadurch erzielen, dass die Ausgangsmaterialien in eine einheitliche Form bzw. einen einheitlichen Aggregatszustand umgewandelt werden. Beispielsweise können alternative Brennstoffe in gesonderten Reaktoren verbrannt oder vergast werden, sodass in der Folge die gewünschte Energie in Form von gasförmigen Stoffen zur Verfügung steht, welche an geeigneter Stelle in das Klinkerherstellungsverfahren eingebracht werden können. Flüssig anfallende Abfallstoffe können über Düsen eingedüst werden. Der überwiegende Teil von Abfallstoffen ist aber in aller Regel nicht unmittelbar in der Klinkerherstellung einsetzbar, wenn nicht zuvor aufwändige Vorbehandlungen vorgenommen werden.

Im österreichischen Patent AT 504 452 B1 wurde ein Verfahren geoffenbart, bei welchem die Rohstoffe als Schlämme oder in aufgeschlämmter Form als pumpfähige Masse einer mechanischen Zerkleinerung unterworfen werden und die pumpfähige Masse in Steigleitungen, Vorkalzinierer und/oder den Drehrohrofen ausgestoßen wird. Dieses Verfahren bietet den Vorteil, dass die derart gebildete pumpfähig Masse, welche die Abfallstoffe und/oder die alternativem Brennstoffe enthält, einer relativ einfachen Vorrichtung zum Einstoßen der Stoffe in ein Klinkerherstellungsverfahren zugeführt werden kann, wobei diese Einrichtung im Wesentlichen aus einem rohrförmigen Gehäuse mit einem zur Rohrachse im Wesentlichen konzentrisch rotierbar gelagerten und zur Rotation antreibbaren Rotor mit den Raum zwischen der Rotorwelle und der Gehäusewand überstreichenden Flügeln besteht, wobei an den Mantel des rohrförmigen Gehäuses eine Mehrzahl von Leitungen bzw. Öffnungen anschließt und wenigstens eine Leitung mit der Schlammzufuhr und wenigstens eine in Umfangsrichtung versetzt angeordnet sind. Mit dieser einfach bauenden und nur gering wartungsanfälligen Einrichtung können Abfallstoffe bzw. alternative Brennstoffe durch die Flügel bzw. Schlagleisten des schnell rotierenden Rotors sowohl desagglomeriert als auch zerkleinert werden, wobei die hohe kinetische Energie, die mit dem Rotor auf die einzubringenden Stoffe übertragen wird, gleichzeitig dafür sorgt, dass die Stoffe mit hoher Geschwindigkeit in den Klinkerherstellungsprozess eingestoßen werden. Die Vorrichtung gemäß diesem Stand der Technik ist über einen Austragskonus an ein Aggregat eines Klinkerherstellungsprozesses angeschlossen, wobei in der Einbauposition die Zufuhr der aufgeschlämmten Abfallstoffe bzw. alternativen Brennstoffe von unten erfolgt. Nachteilig bei dieser Erfindung ist allerdings, dass sich im Betrieb im Austragskonus relativ schnell hartnäckige Anbackungen der schlammartigen Massen bilden, wodurch die Förderleistung zurückgeht.

Es ist somit eine Aufgabe der vorliegenden Erfindung, eine Vorrichtung wie sie dem Stand der Technik zu entnehmen ist, dahingehend weiterzubilden, dass die Bildung von Anbackungen, welche den Einstoß der schlammartigen Massen in das Aggregat eines Klinkerherstellungsprozesses behindern können, vermieden wird. Eine weitere Aufgabe der vorliegenden Erfindung ist es, eine Vorrichtung anzugeben, die einfach an bestehenden Klinkerherstellungsanlagen nachgerüstet bzw. bei Defekten oder Erreichen der maximalen Lebensdauer einfach ausgetauscht werden kann.

Zur Lösung dieser Aufgabe ist eine Vorrichtung der eingangs genannten Art dahingehend weitergebildet, dass der Rotor zumindest teilweise im Wandbereich des Wandteils angeordnet ist. Durch die erfindungsgemäße konstruktive Maßnahme kann der Austragskonus entfallen, der bei der Vorrichtung nach dem Stand der Technik dazu diente, den Rotor mit dem Innenraum des Aggregats der Klinkerherstellungsanlage zu verbinden, sodass die Abfallstoffe und/oder alternativen Brennstoffe, die wie beim Stand der Technik in pumpfähiger Form vorliegen können, durch die schlagende Wirkung der Leisten auf dem Rotor direkt in den Innenraum der Klinkerherstellungsanlage gelangen. Aggregate, welche mit dem erfindungsgemäßen Wandteil versehen werden können, sind beispielsweise der Kalzinator oder andere Reaktoren, in denen alternative Brennstoffe ein- bzw. umgesetzt werden.

Der Rotor der erfindungsgemäßen Vorrichtung ist ähnlich aufgebaut wie jener gemäß der Lehre des eingangs genannten österreichischen Patents AT 504 452 B1, sodass sich eine Förderung der dem Rotor zugeführten Stoffe in einer Richtung quer zur Richtung der Rotationsachse ergibt. Die Leisten reichen beim erfindungsgemäßen Rotor in ihrer radialen Erstreckung lediglich 5-70 mm an die Wand des Rotorgehäuses heran, da dies zu einem erheblichen Widerstand und einer erhöhten Abnutzung der Vorrichtung bei den Drehzahlen führen würde, bei denen der Rotor betrieben wird, um eine ausreichend hohe Energie zum Einstoßen der Stoffe aufzubringen. Derartige Drehzahlen liegen üblicherweise bei 300-1200 Umin⁻¹

Ähnlich wie bei der Lehre des österreichischen Patents AT 504 452 B1 ist die erfindungsgemäße Vorrichtung dazu geeignet, vorzerkleinerte Stoffe einzustoßen, die auf eine maximale Teilchengröße von 100 mm, vorzugsweise maximal 80 mm, vorzerkleinert wurden, bevor sie aufgeschlämmt und der weiteren Zerkleinerung beim Einstoßen unterworfen werden. Durch die Beschränkung des Feststoffanteils auf eine maximale Teilchengröße von 100 bis 80 mm wird die Pumpfähigkeit ohne weiteres sichergestellt, wobei eine derartige Teilchengröße die Möglichkeit bietet, die endgültige Desagglomerierung im Bereich der Aufgabestelle durch die erfindungsgemäße Vorrichtung sicherzustellen. Hierbei wird so vorgegangen, dass feste Abfallstoffe mit Abfallschlämmen gemeinsam einer Zerkleinerung und Homogenisierung unterworfen werden.

Die Wand selbst dient als Träger für die Vorrichtung zum Einbringen von Abfallstoffen und/oder alternativen Brennstoffen in den Innenraum des Aggregats, sodass das erfindungsgemäße Wandteil vorgefertigt werden kann, wodurch ein Modul enthalten wird, das alle wesentlichen Bauteile zum Einbringen der Stoffe in die Klinkerherstellungsanlage trägt, wobei dieses Modul in der Folge leicht und schnell ausgetauscht bzw. in bestehende Anlagen integriert werden kann.

Um die Bildung von Anbackungen insbesondere im Bereich des Rotorgehäuses weiter zu minimieren, ist die erfindungsgemäße Vorrichtung mit Vorteil dahingehend weitergebildet, dass der Rotor scheibenförmige Begrenzungswände normal zur Rotationsachse aufweist. Diese scheibenförmigen Begrenzungswände stellen eine Barriere zu den kreissegmentförmigen Wänden des Rotorgehäuses dar, sodass sich keine oder nur geringe Mengen der Abfallstoffe und/oder der alternativen Brennstoffe, die als pumpfähige Masse vorliegen können, an diesen Wänden des Gehäuses ablagern können.

Wenn, wie es gemäß einer bevorzugten Weiterbildung der vorliegenden Erfindung vorgesehen ist, zumindest eine Leitung zum Zuführen der Abfallstoffe und/oder der alternativen Brennstoffe von oben an das Rotorgehäuse angeschlossen ist, können die einzubringenden Stoffe passiv, d.h. lediglich aufgrund der Schwerkraft dem Rotor zugeführt werden, sodass aufwendige Pumpvorrichtungen in der Nähe des jeweiligen Aggregats der Klinkerherstellungsanlage entfallen können.

Die Abfallstoffe bzw. die alternativen Brennstoffe, die mit der erfindungsgemäßen Vorrichtung desagglomeriert, zerkleinert und in ein Aggregat einer Klinkerherstellungsanlage eingestoßen werden sollen, sind in aller Regel vor allem bei den vorgesehenen hohen Rotationsgeschwindigkeiten des Rotors höchst abrasiv und beanspruchen insbesondere die Leisten, welche als Schlagleisten dienen, in hohem Maße. Gemäß einer bevorzugten Weiterbildung der vorliegenden Erfindung ist es daher vorgesehen, dass die Leisten zumindest teilweise aus einem verschleißfesten Material gefertigt sind. Hierbei ist es denkbar, auf herkömmliche Leisten auf dem Rotor in kritischen Bereichen spezielle Bauteile aus verschleißfestem Material anzuordnen, die Leisten mit derartigen Materialien zu umgeben oder zur Gänze daraus zu fertigen.

In aller Regel werden die Abfallstoffe bzw. die alternativen Brennstoffe mit der erfindungsgemäßen Vorrichtung in eine Feuerung eingebracht. Zum Schutz der Metallwände sind solche Feuerungen an ihrer Innenseite mit einem geeigneten Feuerfestmaterial ausgekleidet. Bevorzugt ist daher die Erfindung dahingehend weitergebildet, dass das Wandteil an der zum Innenraum des Aggregats gewandten Seite mit Feuerfestmaterial beschichtet ist, um die Lebensdauer des Wandteils zu erhöhen.

Aufgrund der hohen kinetischen Energie, die durch den schnell rotierenden Rotor und dessen Leisten auf die zugeführten Abfallstoffe bzw. alternativen Brennstoffe ausgeübt wird, werden die Stoffe in Form eines Strahls in den Innenraum des Aggregats der Klinkerherstellungsanlage eingestoßen. Die Geometrie dieses Strahls ist, wenn sie auch nicht genau definiert ist, zumindest am Austritt aus dem Rotor im Wesentlichen kegel- bzw. pyramidenstumpfförmig, sodass das Wandteil dahingehend weitergebildet ist, dass das Feuerfestmaterial im Bereich des Rotors mit geringerer Schichtdicke aufgebracht ist, um genügend Freiraum zum Austritt des Strahls in den Innenraum des Aggregats der Klinkerherstellungsanlage bereitzustellen.

Die erfindungsgemäße Vorrichtung soll im Betrieb ein Höchstmaß an Flexibilität hinsichtlich der eingebrachten Brennstoffe bieten und insbesondere ist es wünschenswert, dass beispielsweise dann, wenn keine geeigneten Abfallstoffe und/oder alternativen Brennstoffe zur Verfügung stehen, die erfindungsgemäße Vorrichtung außer Betrieb genommen werden kann. Da in diesem Fall der Rotor ruht und es keine Kühlwirkung durch die eingebrachten aufgeschlämmten Stoffe in diesem Bereich gibt, ist die Erfindung mit Vorteil dahingehend weitergebildet, dass der zum Innenraum des Aggregats offene Bereich des Rotorgehäuses mittels eines verschiebbaren Verschlussglieds vom Innenraum des Aggregats abtrennbar ist. Ein solches Verschlussglied ist vernünftigerweise aus feuerfestem Material gefertigt oder mit diesem beschichtet.

Um das Verschlussglied leicht vor den offenen Bereich des Rotorgehäuses verschieben zu können, ist die Erfindung mit Vorteil dahingehend weitergebildet, dass der Wandteil Führungsmittel für das verschiebbare Verschlussglied aufweist, wobei auch eine automatische Kopplung des Betriebszustandes der Einstoßvorrichtung mit dem Verschieben des Verschlussglieds denkbar ist.

Wie bereits erwähnt, kann das erfindungsgemäße Wandteil, auf welchem die Vorrichtung zum Einbringen von Abfallstoffen und/oder alternativen Brennstoffen in Form eines Rotors angeordnet ist, als ein Modul verstanden werden, welches leicht ausgetauscht bzw. nachgerüstet werden kann. In diesem Zusammenhang ist es von Vorteil, wenn der Wandteil den Antrieb des Rotors trägt, wobei es bevorzugt auch vorgesehen sein kann, dass der Wandteil Leitungen zum Einbringen von Flüssigkeiten und/oder Gasen in den Innenraum des Aggregats und/oder des Rotorgehäuses aufweist.

Wie bereits erwähnt muss der Rotor mit einer relativ hohen Drehzahl betrieben werden, um eine ausreichend hohe Energie auf die einzustoßenden Abfall- und/oder alternativen Brennstoffe übertragen zu können, um eine Desagglomerierung, eventuell eine mechanische Zerkleinerung und weiters den Einstoß in das jeweilige Aggregat zu bewirken. Mit Vorteil ist die vorliegende Erfindung daher dahingehend weitergebildet, dass der Rotor zu Drehzahlen von 300-1200 Umin⁻¹, bevorzugt 500-1000 Umin⁻¹ und insbesondere bevorzugt 700 Umin⁻¹ antreibbar ist.

Die Erfindung wird nachfolgend anhand eines in der Zeichnung schematisch dargestellten Ausführungsbeispiels näher erläutert. In dieser zeigen Fig. 1 eine Schnittdarstellung des erfindungsgemäßen Wandteils, Fig. 2 eine perspektivische Ansicht der Öffnung des Rotorgehäuses und der diese Öffnung umgebenden Beschichtung des Feuerfestmaterials und Fig. 3 eine perspektivische Ansicht der Außenseite des Wandteils gemäß der vorliegenden Erfindung.

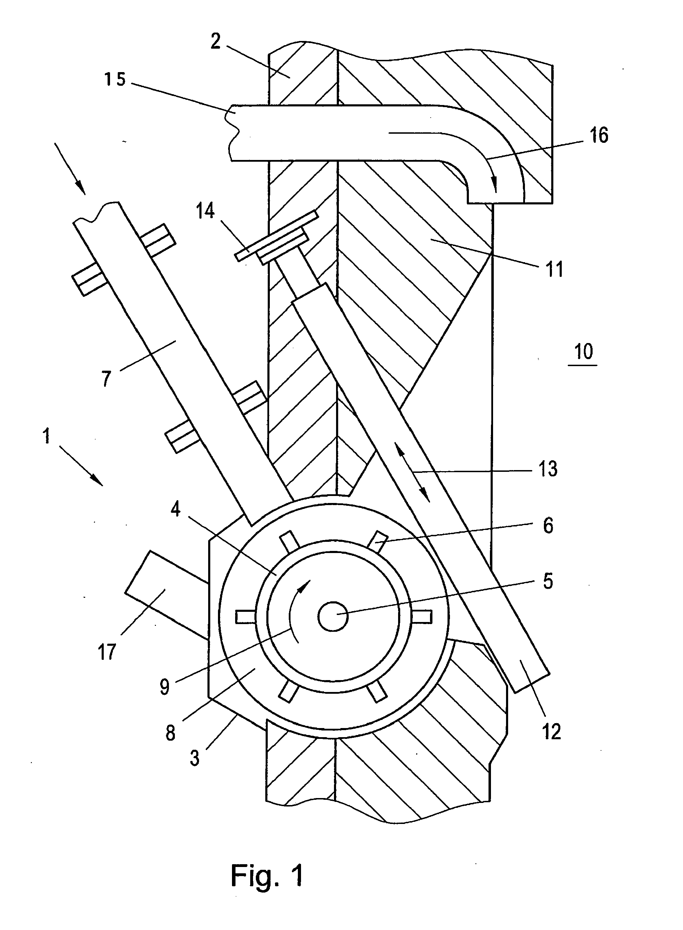

In Fig. 1 ist mit 1 ein erfindungsgemäßer Wandteil bezeichnet, welcher aus einem Wandbereich 2 und dem Rotorgehäuse 3 für die Aufnahme des Rotors 4 besteht. Der Wandteil 1 weist hierbei eine der jeweiligen Einbausituationen am Aggregat der Klinkerherstellungsanlage angepasste Geometrie auf und kann eben oder gekrümmt ausgeführt sein. Im Rotorgehäuse 3 befindet sich der Rotor 4, welcher zur Rotation um die Rotationsachse 5 gelagert ist. Am Rotor 4 sind zur Rotationsachse 5 parallel radial gerichtete Leisten 6 angeordnet, welche als Schlagleisten dienen. Die Zufuhr der Abfallstoffe bzw. der alternativen Brennstoffe zum Rotor 4 erfolgt über die Leitung 7, welche von oben in den Rotorraum 8 mündet. Im Betrieb rotiert der Rotor 4 in Richtung des Pfeils 9, sodass die eingebrachten Stoffe in den Innenraum 10 des Aggregats der Klinkerherstellungsanlage eingestoßen werden. Hierbei erfolgt eine Desagglomerierung und ggf. eine mechanische Zerkleinerung der festen Bestandteile einer pumpfähigen Masse von Abfallstoffen und/oder alternativen Brennstoffen. Die Innenseite des Aggregats bzw. der Feuerung und somit des Wandteils 1 ist mit einer Feuerfestbeschichtung 11 ausgestattet, wobei die Feuerfestbeschichtung 11 im Bereich der Mündung des Rotorgehäuses 3 in den Innenraum 10 mit reduzierter Schichtdicke aufgebracht ist, um den ungehinderten Auswurf der Abfallstoffe bzw. der alternativen Brennstoffe zu ermöglichen. Mit 12 ist ein in Richtung des Doppelpfeils 13 verschiebbares Verschlussglied bezeichnet, welches über nicht näher bezeichnete Manipulationsvorrichtungen 14 betätigt wird, und welches den Rotor 4 im Ruhezustand vor der Hitze im Innenraum 10 des Aggregats der Klinkerherstellungsanlage schützt. Über eine Leitung 15 können Flüssigkeiten und/oder Gase in Richtung des Pfeils 16 eingebracht werden, wodurch eine reinigend wirkende Druckwelle gegen eventuelle Anbackungen sowie eine Scherwirkung auf den Strahl der eingebrachten Abfallstoffe bzw. alternativen Brennstoffe ausgeübt werden kann. Mit 17 ist eine zusätzliche Leitung bezeichnet, die in das Innere des Rotorgehäuses mündet, und über welche beispielsweise Reinigungsflüssigkeiten oder auch Gase eingebracht werden können.

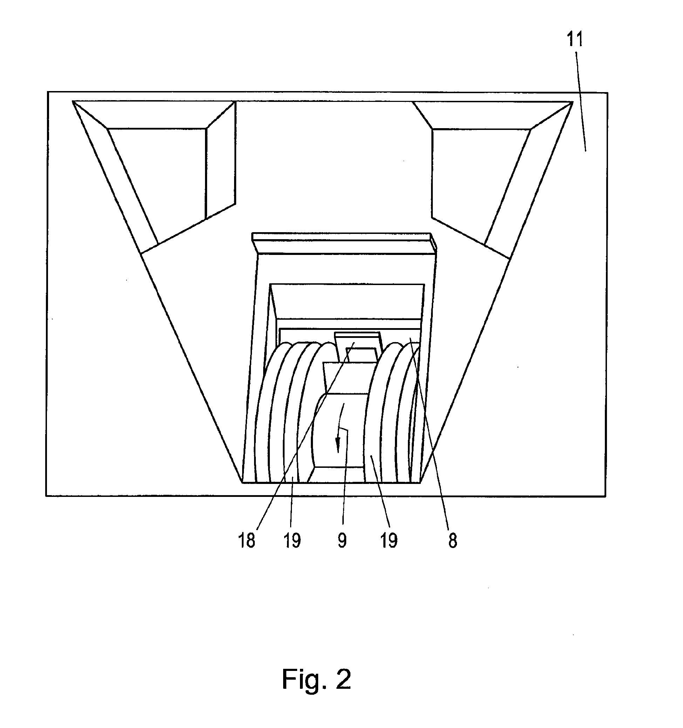

In Fig. 2 ist die Mündung 18 der Leitung 7 zu erkennen, durch welche die einzustoßenden Stoffe in den Rotorraum 8 eingebracht werden. Die Stoffe treffen in diesem Bereich auf die Leisten 6 des Rotors 4, welcher in Richtung des Pfeils 9 rotiert. Mit 19 sind scheibenförmige zum Rotor gehörige Begrenzungswände bezeichnet, welche normal zur Rotationsachse 5 des Rotors 4 angeordnet sind, und welche verhindern, dass das einzustoßende Material seitlich austritt und zu Verunreinigungen bzw. Anbackungen führt. Weiters ist in dieser perspektivischen Darstellung erkennbar, dass das Feuerfestmaterial 11 im Bereich der Öffnung des Rotorgehäuses 3 mit reduzierter Schichtdicke und insbesondere im Wesentlichen trichterförmig ausgebildet ist.

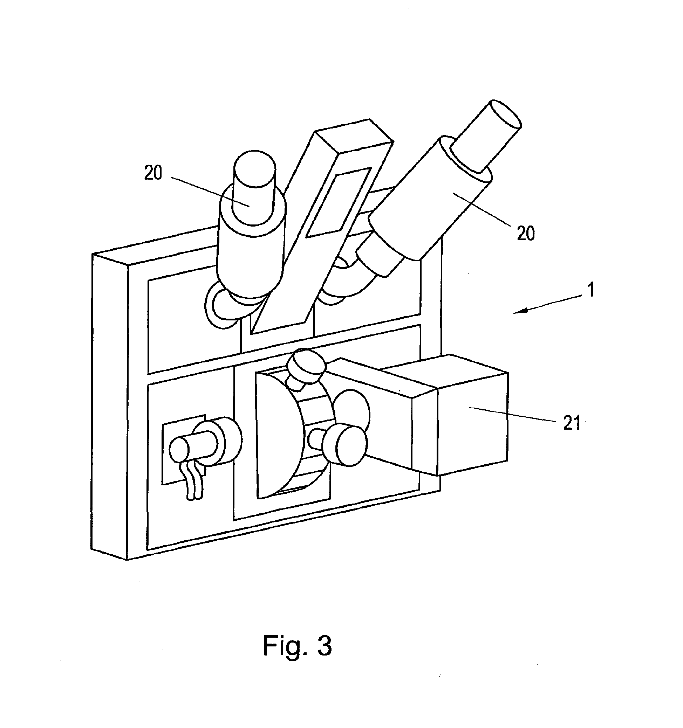

In Fig. 3 ist ein erfindungsgemäßer Wandteil 1 in einer Außenansicht dargestellt, wobei zu erkennen ist, dass auf dem erfindungsgemäßen Wandteil 1 nicht nur die soeben beschriebenen Bauteile angeordnet sein können, sondern dass auch Gebläseaggregate 20 und der Antrieb 21 für den Rotor 4 auf dem erfindungsgemäßen Wandteil 1 festgelegt sein können, sodass sich insgesamt ein Modul ergibt, welches schnell ausgetauscht werden kann bzw. leicht in bestehenden Anlagen nachrüstbar ist.

## Patentansprüche

1. Wandteil eines Aggregats einer Klinkerherstellungsanlage mit einer Vorrichtung zum Einbringen von Abfallstoffen und/oder alternativen Brennstoffen in den Innenraum des Aggregats umfassend ein zum Innenraum des Aggregats offenes Rotorgehäuse mit einem zur Rotation antreibbaren Rotor mit zur Rotationsachse parallel angeordneten, radial gerichteten Leisten und zumindest eine an das Rotorgehäuse angeschlossene Leitung zum Zuführen von Abfallstoffen und/oder alternativen Brennstoffen, **dadurch gekennzeichnet, dass** der Rotor (4) zumindest teilweise im Wandbereich (2) des Wandteils (1) angeordnet ist, wobei das Wandteil (1) an der zum Innenraum (10) des Aggregats gewandten Seite mit Feuerfestmaterial (11) beschichtet ist und das Feuerfestmaterial (11) im Bereich des Rotors (4) mit geringerer Schichtdicke aufgebracht, insbesondere trichterförmig ausgebildet ist und wobei das Wandteil (1) als austauschbares Modul und zum Einstoßen von schlammartigen Massen ausgebildet ist.

2. Wandteil nach Anspruch 1, **dadurch gekennzeichnet, dass** der Rotor (4) scheibenförmige Begrenzungswände (19) normal zur Rotationsachse (5) aufweist.

3. Wandteil nach Anspruch 1 oder 2, **dadurch gekennzeichnet, dass** die zumindest eine Leitung (7) zum Zuführen der Abfallstoffe und/oder der alternativen Brennstoffe von oben an das Rotorgehäuse (3) angeschlossen ist.

4. Wandteil nach Anspruch 1, 2 oder 3, **dadurch gekennzeichnet, dass** die Leisten (6) zumindest teilweise aus einem verschleißfesten Material gefertigt sind.

5. Wandteil nach einem der Ansprüche 1 bis 4, **dadurch gekennzeichnet, dass** der zum Innenraum (10) des Aggregats offene Bereich des Rotorgehäuses (3) mittels eines verschiebbaren Verschlussglieds (12) vom Innenraum (10) des Aggregats abtrennbar ist.

6. Wandteil nach einem der Ansprüche 1 bis 5, **dadurch gekennzeichnet, dass** der Wandteil (1) Führungsmittel für das verschiebbare Verschlussglied (12) aufweist.

7. Wandteil nach einem der Ansprüche 1 bis 6, **dadurch gekennzeichnet, dass** der Wandteil (1) den Antrieb (21) des Rotors (4) trägt.

8. Wandteil nach einem der Ansprüche 1 bis 7, **dadurch gekennzeichnet, dass** der Wandteil (1) Leitungen (15) zum Einbringen von Flüssigkeiten und/oder Gasen in den inneraum (10) des Aggregats und/oder des Rotorgehäuses (3) aufweist.

9. Wandteil nach einem der Ansprüche 1 bis 8, **dadurch gekennzeichnet, dass** der Rotor (4) zu Drehzahlen von 300-1200 Umin⁻¹, bevorzugt 500-1000 Umin⁻¹ und insbesondere bevorzugt 700 Umin⁻¹ antreibbar ist.

## Claims

1. A wall part of a unit of a clinker production plant including a device for introducing waste materials and/or alternative fuels into the interior of the unit, comprising a rotor housing open towards the interior of the unit and including a rotor that is drivable for rotation and has radially oriented strips arranged in parallel with the axis of rotation, and at least one line connected to the rotor housing for supplying waste materials and/or alternative fuels, **characterized in that** the rotor (4) is arranged at least partially in the wall region (2) of the wall part (1), wherein the wall part (1) is coated with a refractory material (11) on its side facing the interior (10) of the unit, and the refractory material (11) is applied with a reduced layer thickness in the region of the rotor (4) and, in particular, configured to be funnel-shaped, and wherein the wall part (1) is configured as an exchangeable module and for injecting of slurry-like masses.

2. A wall part according to claim 1, **characterized in that** the rotor (4) comprises disc-shaped boundary walls (19) extending normally to the axis of rotation (5).

3. A wall part according to claim 1 or 2, **characterized in that** the at least one line (7) for charging the waste materials and/or alternative fuels is connected from above to the rotor housing (3).

4. A wall part according to claim 1, 2 or 3, **characterized in that** the strips (6) are at least partially made of a wearresistant material.

5. A wall part according to any one of claims 1 to 4, **characterized in that** the portion of the rotor housing (3) that is open towards the interior (10) of the unit is separable from the interior (10) of the unit by a movable closing member (12).

6. A wall part according to any one of claims 1 to 5, **characterized in that** the wall part (1) comprises guiding means for the movable closing member (12).

7. A wall part according to any one of claims 1 to 6, **characterized in that** the wall part (1) carries the drive (21) of the rotor (4).

8. A wall part according to any one of claims 1 to 7, **characterized in that** the wall part (1) comprises lines (15) for introducing liquids and/or gases into the interior (10) of the unit and/or the rotor housing (3).

9. A wall part according to any one of claims 1 to 8, **characterized in that** the rotor (4) is drivable for speeds of 300-1200 rpm⁻¹, preferably 500-1000 rpm⁻¹, and particularly preferred 700 rpm⁻¹.

## Revendications

1. Partie de paroi d'un groupe d'une installation de production de clinker, dotée d'un dispositif destiné à introduire des déchets et/ou des combustibles alternatifs dans l'espace interne du groupe, comprenant un carter de rotor ouvert vers l'espace interne du groupe, pourvu d'un rotor pouvant être entraîné en rotation et présentant des nervures orientées radialement et disposées parallèlement à l'axe de rotation, et au moins un conduit raccordé au carter de rotor pour l'alimentation en déchets et/ou en combustibles alternatifs, **caractérisée en ce que** le rotor (4) est disposé au moins en partie dans la région de paroi (2) de la partie de paroi (1), la partie de paroi (1) étant revêtue, sur la face orientée vers l'espace interne (10) du groupe, d'un matériau réfractaire (11) et le matériau réfractaire (11) étant appliqué en couche d'épaisseur plus faible dans la région du rotor (4), étant conçu en particulier sous forme d'entonnoir, et la partie de paroi (1) étant réalisée sous forme de module interchangeable et conçue pour l'introduction de masses boueuses.

2. Partie de paroi selon la revendication 1, **caractérisée en ce que** le rotor (4) présente des parois de délimitation (19) en forme de disques perpendiculairement à l'axe de rotation (5).

3. Partie de paroi selon la revendication 1 ou 2, **caractérisée en ce que** le conduit (7), au moins au nombre de un, d'alimentation en déchets et/ou en combustibles alternatifs est raccordé par le haut au carter de rotor (3).

4. Partie de paroi selon la revendication 1, 2 ou 3, **caractérisée en ce que** les nervures (6) sont réalisées au moins partiellement dans un matériau résistant à l'usure.

5. Partie de paroi selon l'une des revendications 1 à 4, **caractérisée en ce que** la région du carter de rotor (3) ouverte vers l'espace interne (10) du groupe est séparable de l'espace interne (10) au moyen d'un organe de fermeture (12) coulissant.

6. Partie de paroi selon l'une des revendications 1 à 5, **caractérisée en ce que** la partie de paroi (1) présente des moyens de guidage de l'organe de fermeture (12) coulissant.

7. Partie de paroi selon l'une des revendications 1 à 6, **caractérisée en ce que** la partie de paroi porte la commande d'entraînement (21) du rotor (4).

8. Partie de paroi selon l'une des revendications 1 à 7, **caractérisée en ce que** la partie de paroi (1) présente des conduits (15) pour introduire des liquides et/ou des gaz dans l'espace interne (10) du groupe et/ou du carter de rotor (3).

9. Partie de paroi selon l'une des revendications 1 à 8, **caractérisée en ce que** le rotor (4) peut être entraîné à des vitesses de rotation de 300 à 1200 tr.min⁻¹, de préférence de 500 à 1000 tr.min⁻¹, et de manière particulièrement préférée de 700 tr.min⁻¹.
